# FASCICULE DE BREVET EUROPEEN

(11) **EP 1 572 807 B1**
(45) Date de publication et mention de la délivrance du brevet: **03.10.2007**
(21) Numéro de dépôt: 03799629.5
(22) Date de dépôt: 18.12.2003
(51) Int. Cl.: C08L 95/00

(54) **PROCEDE DE PREPARATION DE COMPOSITIONS BITUME/POLYMERE A RESISTANCE AUX SOLVANTS PETROLIERS AMELIOREE, COMPOSITIONS AINSI OBTENUES ET LEUR UTILISATION COMME LIANT BITUMINEUX.**
VERFAHREN ZUR HERSTELLUNG VON BITUMEN/POLYMER-ZUSAMMENSETZUNGEN MIT VERBESSERTER BESTÄNDIGKEIT GEGENÜBER ERDÖL-BASIERTEN LÖSUNGSMITTELN, DARAUS ERHALTENE ZUSAMMENSETZUNGEN UND DEREN ANWENDUNG ALS BITUMINÖSES BINDEMITTEL
METHOD FOR PRODUCING BITUMEN/POLYMER COMPOUNDS EXHIBITING IMPROVED RESISTANT TO PETROLEUM SOLVENTS, THUS OBTAINED COMPOUNDS AND THE USE THEREOF IN THE FORM OF A BITUMINOUS BINDER

(30) Priorité: 20.12.2002 FR 0216312
(43) Date de publication de la demande: 14.09.2005
(73) Titulaire: TotalFinaElf France, 92800 Puteaux (FR)
(72) Inventeur: PLANCHE, Jean-Pascal, F-38540 St-Just-Chaleyssin (FR); CHAVEROT, Pierre, F-42800 Sainte Croix en Jarez (FR); LAPALU, Laurence, F-69100 Villeurbanne (FR); PONSARDIN, Mickael, F-69008 Lyon (FR)
(74) Mandataire: Pöpping, Barbara
(86) Numéro de dépôt international: PCT/FR2003/003795
(87) Numéro de publication internationale: WO 2004/060991

(56) Documents cités:
- WO-A-97/44397
- FR-A- 2 726 830
- FR-A- 2 748 487
- US-A- 5 494 966
- DATABASE WPI Week 197911 Derwent Publications Ltd., London, GB; AN 1979-21171B XP002250740 & JP 54 003165 B (NICHIREKI KAGAKU KO) 19 février 1979 (1979-02-19)

## Description

L'invention concerne l'utilisation d'un copolymère oléfinique fonctionnalisé pour améliorer la résistance aux solvants pétroliers d'une composition bitume/polymère, ainsi que l'utilisation d'une telle composition bitume/polymère pour améliorer la résistance aux solvants pétroliers de revêtements, notamment de revêtements superficiels routiers, d'enrobés bitumineux ou de revêtements d'étanchéité.

Il est bien connu d'utiliser des compositions bitumineuses comme revêtements de surfaces diverses et, en particulier, comme enduits superficiels routiers, à condition que ces compositions présentent en combinaison un certain nombre de caractéristiques mécaniques, exposées en détail, par exemple, dans WO 96/ 15193 A.

Les bitumes usuels ne présentent cependant pas l'ensemble des qualités requises et il a donc été proposé depuis longtemps d'y incorporer des polymères, notamment des élastomères, en vue de modifier leurs propriétés mécaniques, et de former ainsi des compositions bitume/polymère présentant les caractéristiques mécaniques souhaitées pour l'application à laquelle elles sont destinées.

C'est ainsi que WO 96/15 193 A décrit de très nombreuses compositions bitume/polymère présentant une stabilité et des propriétés mécaniques améliorées, ainsi que des procédés de préparation de ces compositions.

Il est connu, en outre, que les bitumes sont sensibles aux solvants pétroliers et que des carburants tels que le gazole, les essences et le kérosène, en particulier, ont un effet néfaste sur leurs propriétés mécaniques. Pour remédier à cet inconvénient, il a été proposé, par exemple, d'incorporer des cires dans le bitume, notamment des cires de polyéthylène (voir WO 02/ 14 699).

La présente invention vise, elle aussi, à améliorer la résistance aux solvants pétroliers, notamment au kérosène, de compositions bitumineuses du type bitume/polymère, mais par un choix judicieux des constituants de ces compositions et de leurs conditions de préparation.

L'invention a par conséquent pour premier objet l'utilisation d'au moins un polymère oléfinique fonctionnalisé P choisi parmi les copolymères comprenant, en % en poids du polymère oléfinique :
(i) x % de motifs issus de l'éthylène ou du propylène,
(ii) y % de motifs issus d'un ou de plusieurs monomères de formule :

   CH₂=CR₁R₂,

   dans laquelle :
   - R₁ désigne H, -CH₃ ou -C₂H₅,
   - et R₂ représente un radical -COOR₅, -OR₅, ou-OOCR₆,
   où R₅ désigne un radical alkyle en C₁ à C₁₀ et, de préférence, en C₁ à C₆,
   et R₆ représente H ou un radical alkyle en C₁ à C₃,
(iii) z% de motifs issus d'au moins un monomère de formule:

   R₃-CH=CR₁R₄.
dans laquelle :
- R₁ a la même définition que précédemment,
- R₃ désigne H, -COOH ou -COOR₅, R₅ ayant la même signification que précédemment,
- R₄ désigne un radical-COOH, -OH, 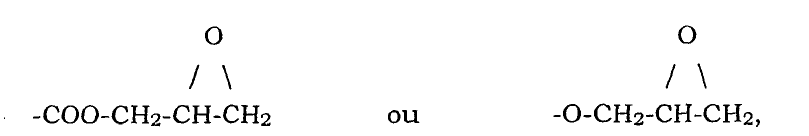
- x, y et z étant des nombres tels que x+y+z=100,
- et x > y+ 10, x > z et 0 ≤ z ≤ 20,
pour améliorer la résistance aux solvants pétroliers d'une composition bitume/polymère comprenant :
(1) au moins un bitume; et, en % en poids du bitume :
(2) entre 0,3% et 20% d'un élastomère réticulable E, et
(3) une quantité efficace d'un agent de couplage Ac apte à fournir une quantité de soufre libre représentant entre 0,1 et 20 % du poids de l'élastomère réticulable E présent dans le milieu réactionnel,
ledit polymère oléfinique fonctionnalisé P étant utilisé en une quantité comprise entre de 0,05% et 15% en poids, rapportée à la quantité de bitume (1) utilisée.

L'invention a en outre pour objet l'utilisation d'une telle composition bitume/polymère à résistance aux solvants pétroliers améliorée, pour améliorer la résistance aux solvants pétroliers de revêtements, notamment de revêtements superficiels routiers, d'enrobés bitumineux ou de revêtements d'étanchéité.

Le procédé permettant l'amélioration aux solvants pétroliers d'une composition bitume/polymère, comprend la mise en contact, à une température comprise entre environ 100°C et environ 230°C et sous agitation, pendant une durée d'au moins 10 minutes :
(1) d'au moins un bitume ;
   et, en % en poids du bitume :
(2) entre 0,3% et 20% d'un élastomère réticulable E;
(3) entre 0,05% et 15% d'au moins un polymère oléfinique fonctionnalisé P choisi parmi les copolymères comprenant, en % en poids du polymère oléfinique :
   (i) x % de motifs issus de l'éthylène ou du propylène,
   (ii) y % de motifs issus d'un ou de plusieurs monomères de formule :

      CH₂=CR₁R₂,

      dans laquelle :
      - R₁ désigne H, -CH₃ ou -C₂H₅,
      - et R₂ représente un radical -COOR₅, -OR₅, ou-OOCR₆,
      où R₅ désigne un radical alkyle en C₁ à C₁₀ et, de préférence, en C₁ à C₆,
      et R₆ représente H ou un radical alkyle en C₁ à C₃,
   (iii) z% de motifs issus d'au moins un monomère de formule :

      R₃-CH=CR₁R₄.

      dans laquelle :
      - R₁ a la même définition que précédemment,
      - R₃ désigne H, -COOH ou -COOR₅, R₅ ayant la même signification que précédemment,
      - R₄ désigne un radical -COOH, -OH, 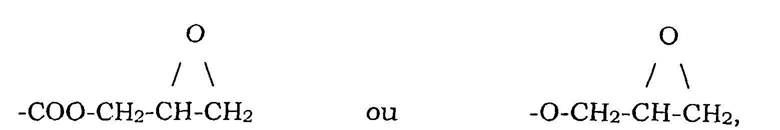
      - x, y et z étant des nombres tels que x+y+z=100,
      - et x > y + 10, x > z et 0 ≤ z ≤ 20;
(4) et d'une quantité efficace d'un agent de couplage Ac apte à fournir une quantité de soufre libre représentant entre 0,1 et 20 % du poids de l'élastomère réticulable E présent dans le milieu réactionnel.

De préférence, l'élastomère réticulable E est présent dans le milieu réactionnel en une quantité représentant entre 0,5 et 10 % du poids du bitume et le polymère oléfinique fonctionnalisé représente avantageusement entre 0,10 et 10 % en poids du bitume.

De préférence, l'agent de couplage Ac représente entre 0,5 % et 10 % en poids de l'élastomère réticulable E.

Le monomère de formule CH₂ = CR₁R₂ qui fournit dans le copolymère oléfinique P des motifs (̵CH₂-CR₁R₂)- est choisi en particulier parmi l'acétate de vinyle et les acrylates et méthacrylates d'alkyle (de préférence butyle), respectivement de formule CH₂=CH-COOR₅ et CH₂=C(CH₃)COOR₅.

De préférence, le monomère de formule R₃-CH=CR₁R₄ qui fournit dans le copolymère oléfinique P des motifs (̵CHR₃-CR₁R₄)- est choisi en particulier parmi l'acide maléique et l'anhydride maléique, l'acide acrylique, l'acide méthacrylique, les (méth)acrylates de glycidyle de formule : 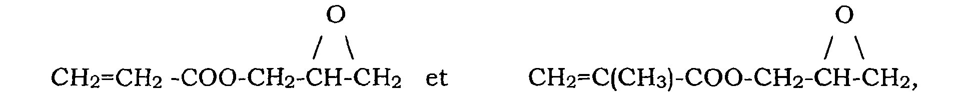 l'alcool vinylique et le vinyléther de glycidyle de formule :

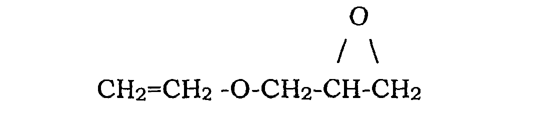

Avantageusement, les copolymères oléfiniques susceptibles de constituer le polymère P, sont choisis parmi :
(i) les terpolymères statistiques d'éthylène, d'acrylate ou métha-crylate d'alkyle à reste alkyle en C₁ à C₆, tel que méthyle, éthyle, butyle, et d'anhydride maléique, qui renferment, en poids, 0,5 % à 40 % de motifs issus de l'acrylate ou du méthacrylate d'alkyle et 0,5 % à 15 % de motifs issu de l'anhydride maléique, le reste étant formé de motifs issus de l'éthylène ;
(ii) les terpolymères statistiques d'éthylène, d'acrylate ou méthacrylate d'alkyle à reste alkyle en C₁ à C₆, tel que méthyle, éthyle et butyle, et d'acrylate ou méthacrylate de glycidyle, qui renferment, en poids, 0,5 % à 40 % de motifs issus de l'acrylate ou du méthacrylate d'alkyle et 0,5 % à 15 % de motifs issus de l'acrylate ou du méthacrylate de glycidyle, le reste étant formé de motifs issus de l'éthylène ;
(iii) les polyéthylènes basse densité greffés d'anhydride maléique et les polypropylènes greffés d'anhydride maléique, qui renferment, en poids, 0,5 % à 15 % de motifs greffés issus de l'anhydride maléique.
(iv) les copolymères statistiques d'éthylène et d'acrylate ou méthacrylate de glycidyle, qui renferment, en poids, 0,5 % à 15 % de motifs issus de l'acrylate ou du méthacrylate de glycidyle, le reste étant formé de motifs issus de l'éthylène.

Parmi ces copolymères oléfiniques, on préfère en particulier les terpolymères statistiques du groupe (ii) et les copolymères statistiques du groupe (iv).

Plus particulièrement, le copolymère oléfinique utilisé pour constituer le polymère P a une masse moléculaire telle que l'indice de fluidité du copolymère, déterminé selon la norme ASTM D 1238 (essai réalisé à 190°C sous une charge de 2,16 kg), ait une valeur, exprimée en g par 10 minutes, comprise entre 0,3 et 3000 et, de préférence, entre 0,5 et 900.

Le bitume ou mélange de bitumes, que l'on utilise dans la préparation des compositions bitume/polymère, est choisi avantageusement parmi les bitumes qui possèdent une pénétrabilité à l'aiguille à 25°C de 10 à 900 dixièmes de millimètre (norme EN 12591) et, de préférence, entre 20 et 400 dixièmes de millimètre. Ces bitumes peuvent être des bitumes soufflés ou semi-soufflés, voire même certaines coupes pétrolières ou des mélanges de bitumes et de distillats sous vide.

L'élastomère réticulable E que l'on utilise pour préparer les compositions bitume/polymère et que l'on retrouve réticulé dans lesdites compositions, peut être choisi parmi le polyisoprène, le polybutadiène, le caoutchouc butyle, les terpolymères éthylène/propylène/ diène (EPDM).

Avantageusement, ledit élastomère E est choisi parmi les copolymères statistiques ou séquencés de styrène et d'un diène conjugué tel que le butadiène, l'isoprène, le chloroprène, le butadiène carboxyle, l'isoprène carboxyle. Plus particulièrement, cet élastomère E consiste en un ou plusieurs copolymères choisis parmi les copolymères séquencés, notamment di- ou triséquencés, avec ou sans charnière statistique, de styrène et de butadiène, de styrène et d'isoprène, de styrène et de chloroprène, de styrène et de butadiène carboxylée, ou encore de styrène et d'isoprène carboxylée.

Le copolymère de styrène et de diène conjugué et, en particulier, chacun des polymères précités, possède avantageusement une teneur en styrène allant de 5 % à 50 % en poids. La masse moléculaire moyenne en poids du copolymère de styrène et de diène conjugué, et notamment celle des copolymères mentionnés ci-dessus, peut être comprise, par exemple, entre 10 000 et 600 000 Daltons et se situe de préférence entre 30 000 et 400 000 Daltons.

L'agent de couplage Ac que l'on utilise dans la préparation des compositions bitume/polymère selon l'invention, peut être choisi dans le groupe constitué par le soufre élémentaire, les polysulfures d'hydrocarbyle, les accélérateurs de vulcanisation donneurs de soufre, les mélanges de tels produits entre eux et/ou avec des accélérateurs de vulcanisation non donneurs de soufre.

L'agent de couplage Ac pourra notamment être choisi parmi au moins un des agents de couplage décrits dans EP 739 386 A, EP 799 280 A et EP 837 910 A.

Le milieu réactionnel utilisé pour la mise en oeuvre du procédé peut être formé en réalisant tout d'abord un mélange renfermant le bitume ou le mélange de bitumes et l'élastomère réticulable E, puis en incorporant à ce mélange l'agent de couplage et, simultanément ou ultérieurement, le polymère P.

Toutefois, selon un mode de réalisation préféré, le milieu réactionnel destiné à la réalisation des compositions bitume/polymère est formé en utilisant un mélange renfermant le bitume ou le mélange de bitumes, l'élastomère réticulable E et le polymère P, puis en incorporant l'agent de couplage Ac au mélange obtenu.

Ce mode de réalisation préféré est avantageusement mis en oeuvre en mettant tout d'abord en contact l'élastomère réticulable E et le polymère P avec le bitume ou le mélange de bitumes, en utilisant des teneurs en élastomère E et en polymère P, par rapport au bitume, choisies dans les intervalles définis précédemment et en opérant à des températures comprises entre 100 et 230°C et sous agitation, pendant une durée suffisante, généralement de l'ordre de quelques dizaines de minutes à quelques heures, pour former un mélange homogène. On incorpore ensuite au mélange obtenu l'agent de couplage, en une quantité choisie dans l'intervalle défini précédemment, et en maintenant le tout sous agitation, à des températures comprises entre 100 et 230°C, identiques ou non aux températures de mélange de l'élastomère réticulable E et du polymère P avec le bitume ou le mélange de bitumes, pendant une durée au moins égale à 10 minutes et généralement comprise entre 10 minutes et 5 heures, pour former un produit de réaction constituant la composition bitume/polymère.

Dans la mise en oeuvre préférée exposée ci-dessus, le polymère P peut être incorporé au bitume ou au mélange de bitumes avant ou après l'élastomère réticulable E, une incorporation simultanée pouvant être également envisagée.

Comme il sera décrit ci-après, la composition bitume/polymère obtenue par le procédé conforme à l'invention et dans laquelle l'élastomère E est réticulé présente des propriétés très améliorées de résistance aux solvants pétroliers, et notamment au kérosène. Cette composition constitue un autre objet de la présente invention.

Dans le milieu réactionnel utilisé pour réaliser une telle composition peuvent être incorporés un ou plusieurs additifs, de préférence des additifs polyfonctionnels, susceptibles de réagir avec les groupements fonctionnels du ou des copolymères oléfiniques. Ces additifs réactifs peuvent être en particulier des amines, notamment des polyamines, primaires ou secondaires, des alcools, notamment des polyols, des acides, notamment des polyacides, ou encore des sels métalliques.

La quantité du ou des additifs réactifs que l'on incorpore au milieu réactionnel peut être comprise entre 0,01 et 10 % en poids du bitume présent dans ce milieu réactionnel et, plus particulièrement, entre 0,05 et 5 % en poids de ce bitume.

Dans le milieu réactionnel utilisé pour la mise en oeuvre du procédé conforme à l'invention, on peut également incorporer en une quantité de 1 à 40 % en poids du bitume un agent fluxant, qui peut consister, notamment, en une huile hydrocarbonée présentant un intervalle de distillation à la pression atmosphérique, déterminé selon la norme ASTM D86-67, compris entre 100 et 600 °C.

Cette huile hydrocarbonée, qui peut être notamment une coupe pétrolière de type aromatique, une coupe pétrolière de type naphthèno-aromatique, une coupe pétrolière de type naphtèno-paraffinique, une coupe pétrolière de type paraffinique, une huile de houille ou encore une huile d'origine végétale, sera choisie par l'homme du métier pour être suffisamment "lourde" pour limiter l'évaporation au moment de son addition au bitume et en même temps suffisamment "légère" pour être éliminée au maximum après épandage de la composition bitume/polymère la contenant, de manière à retrouver les mêmes propriétés mécaniques qu'aurait présentées, après épandage à chaud, la composition bitume-polymère préparée sans agent fluxant.

Outre les additifs réactifs et l'agent de fluxage, on peut naturellement ajouter au milieu réactionnel des additifs conventionnellement utilisés dans les compositions bitume/polymère, tels que des promoteurs d'adhérence ou encore des charges.

Dans la forme de mise en oeuvre du procédé selon l'invention utilisant une huile hydrocarbonée telle que définie ci-dessus à titre d'agent fluxant, l'élastomère réticulable E, le polymère P et l'agent de couplage Ac peuvent être incorporés au bitume sous la forme d'une solution mère de ces produits dans l'huile hydrocarbonée constituant l'agent fluxant.

Cette solution mère est préparée par mise en contact des ingrédients la composant, à savoir l'huile hydrocarbonée servant de solvant, l'élastomère réticulable E, le polymère P et l'agent de couplage Ac, sous agitation, à une température comprise entre 10 et 170°C, pendant une durée suffisante, par exemple de 30 à 90 minutes, pour obtenir une dissolution complète de l'élastomère réticulable E, du polymère P et de l'agent de couplage Ac dans l'huile hydrocarbonée.

Les concentrations respectives de l'élastomère réticulable E, du polymère P et de l'agent de couplage Ac dans la solution mère peuvent varier assez largement en fonction, notamment, de la nature de l'huile hydrocarbonée utilisée pour dissoudre l'élastomère réticulable E, le polymère P et l'agent de couplage Ac.

Pour préparer les compositions bitume/polymère suivant l'invention en faisant appel à la technique de la solution mère, on mélange la solution mère renfermant l'élastomère réticulable E, le polymère P et l'agent de couplage Ac, avec le bitume ou le mélange de bitume, en opérant à des températures comprises entre 100 et 230°C et sous agitation, puis en maintenant le mélange résultant sous agitation dans ce domaine de températures, pendant une durée au moins égale à 10 minutes et allant généralement de 10 à 90 minutes, pour obtenir un produit de réaction constituant la composition bitume/polymère.

La quantité de solution mère mélangée au bitume est choisie pour fournir les quantités désirées, par rapport au bitume, d'élastomère réticulable E, de polymère P et d'agent de couplage Ac, ces quantités devant être situées dans les intervalles définis précédemment.

Les compositions bitume/polymère obtenues par le procédé selon l'invention peuvent être utilisées telles quelles ou bien diluées en des proportions variable avec un bitume ou un mélange de bitumes, et/ou encore avec une composition conforme à l'invention ayant les caractéristiques différentes, pour constituer des liants bitume/polymère ayant les teneurs souhaitées en élastomère E réticulé et en polymère P.

Les liants bitume/polymère formés par les compositions bitume/polymère selon l'invention ou résultant de la dilution desdites compositions par un bitume ou un mélange de bitumes et/ou par une autre composition bitume/polymère selon l'invention, jusqu'aux teneurs désirées respectivement en élastomère E réticulé et en polymère P dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtement d'étanchéité.

Ces utilisations des compositions bitume/polymère obtenues par le procédé conforme à l'invention constituent un autre objet de cette invention.

On notera que, pour de telles utilisations, la dilution d'une composition conforme à l'invention avec un bitume ou un mélange de bitumes, et/ou encore avec une composition bitume/polymère différente, peut être réalisée aussitôt après l'obtention de cette composition, lorsqu'une utilisation quasi-immédiate des liants bitume/polymère résultants est requise, ou après une durée de stockage plus ou moins prolongée des compositions bitume/polymère, lorsqu'une utilisation différée des liants bitume/polymère résultants est envisagée. Le bitume ou mélange de bitumes utilisé pour la dilution peut être choisi parmi les bitumes définis précédemment comme convenant à la préparation des compositions bitume/polymère.

Les exemples qui suivent et qui n'ont pas de caractère limitatif sont destinés à illustrer les propriétés améliorées de résistance aux solvants pétroliers des compositions conformes à l'invention.

Dans ces exemples, on utilise des éprouvettes du liant bitumineux de 40 x 12 x 2 mm, coulées à chaud dans des moules. Après être revenues à température ambiante, les éprouvettes sont pesées, puis trempées pendant 10 minutes dans du kérosène, puis égouttées pendant 10 minutes à l'air libre et pesées à nouveau. La différence de masse du liant, après ce traitement, rapportée à la masse initiale, est appelée variation de masse relative (en %) et est le critère d'évaluation.

Si cette variation est négative, cela signifie que le liant a perdu du poids par dissolution partielle dans le kérosène. Si cette variation est positive, cela signifie que le liant a gonflé en absorbant du kérosène.

Une variation positive est préférée à une variation négative, car elle témoigne d'une affinité beaucoup plus faible du liant pour le kérosène. Plus cette variation est proche de zéro, meilleure est la tenue au kérosène.

### Exemple 1 (Exemple comparatif)

Un bitume pur de classe de pénétration 50/70 est soumis à trois essais de résistance au kérosène du type présenté plus haut.

Les résultats suivants sont obtenus :

| | ESSAI 1 | ESSAI 2 | ESSAI 3 |
|---|---|---|---|
| Variation de masse relative (%) | -22, 1 | -20,1 | -19,4 |

Ce bitume présente donc une perte de masse moyenne de 20,5 %, avec un écart - type de 1,4%.

### Exemple 2 (Exemple comparatif)

Le liant utilisé dans cet exemple est un bitume/élastomère réticulé in situ, contenant 5 % en poids du bitume d'un copolymère dibloc styrène butadiène à 25 % en poids de styrène et possédant une masse moléculaire mesurée par GPC de 120000 Daltons environ.

Ce liant modifié est obtenu en dispersant le polymère dans du bitume de classe 50/70 à 180°C sous agitation modérée pendant 2 heures, puis en réticulant l'ensemble avec 0,13 % de soufre solide, toujours sous agitation pendant 4 heures.

Ce liant modifié est soumis à trois essais de résistance au kérosène du type ci-dessus.

On obtient les résultats suivants.

| | ESSAI 1 | ESSAI 2 | ESSAI 3 |
|---|---|---|---|
| Variation de masse relative (%) | -14,3 | -14,9 | -13,3 |

Le liant modifié de cet exemple présente donc une perte de masse moyenne de 14,2 %, avec un écart - type de 0,8 %.

### Exemple 3 (selon l'invention)

On prépare un liant modifié comme dans l'Exemple 2, contenant 4 % d'un copolymère dibloc styrène butadiène identique à celui de l'exemple 2 et 1 % en poids d'un copolymère Cf fonctionnalisé d'éthylène et de méthacrylate de glycidyle [produit de la gamme Lotader^{®} commercialisé par la société ATOFINA].

Les résultats obtenus sont les suivants.

| | ESSAI 1 | ESSAI 2 | ESSAI 3 |
|---|---|---|---|
| Variation.de masse relative (%) | +14,4 | +12,7 | +10,8 |

Le liant modifié de cet exemple présent donc une augmentation de masse moyenne de 12,9 %, avec un écart type de 1,4 %.

### Exemple 4 (selon l'invention)

On procède comme dans l'Exemple 3, mais en remplaçant cette fois 2 % de l'élastomère par le même copolymère Cf fonctionnalisé.

On soumet le liant modifié ainsi préparé aux mêmes essais que précédemment et l'on obtient les résultats suivants.

| | ESSAI 1 | ESSAI 2 | ESSAI 3 |
|---|---|---|---|
| Variation de masse relative (%) | +11,3 | +11,7 | +10,8 |

Le liant modifié de cet exemple présente donc une augmentation de masse moyenne de 11,3, avec un écart type de 0,4 %.

### Exemple 5 (selon l'invention)

On prépare un liant modifié comme dans l'Exemple 2 , contenant 4 % d'un copolymère dibloc styrène-butadiène identique à celui de l'Exemple 2 et 1 % en poids d'un terpolymère Tf fonctionnalisé d'éthylène, de méthacrylate de méthyle et de méthacrylate de glycidyle (produit de la gamme Lotader^{®} commercialisé par la société ATOFINA).

Ce liant modifié est obtenu en dispersant les polymères dans du bitume de classe 50/70 à 180 °C sous agitation modérée pendant 3 heures, puis en réticulant l'ensemble avec 0,13 % de soufre solide sous agitation pendant 2 heures, puis avec 0,3 % d'acide polyphosphorique sous agitation pendant 2 heures.

Les résultats obtenus sont les suivants :

| | ESSAI 1 | ESSAI 2 | ESSAI 3 |
|---|---|---|---|
| Variation de masse relative (%) | +12,3 | + 9,7 | + 10,9 |

Le liant modifié de cet exemple présente donc une augmentation de masse moyenne de 10,9 % avec un écart-type de 1,3 %.

Les résultats de ces exemples montrent que, dans l'Exemple 2, la perte de masse de la composition bitume/élastomère réticulé est inférieure de 6 % en valeur absolue à celle du bitume pur de l'Exemple 1. Ceci traduit une dissolution moindre du liant dans le kérosène et, déjà une amélioration significative du pouvoir de résistance au kérosène.

Les bitumes élastomères réticulés selon l'invention des Exemples 3, 4 et 5 ont, quant à eux, accru leur poids d'environ 11%.

Par ailleurs, l'observation visuelle du kérosène restant dans le becher ayant servi pour l'essai, montre une solution quasi transparente, avec une couche opaque au fond du becher de 1 mm environ, alors que, dans les deux cas précédents, cette même solution était noire, avec une couche opaque de 2 cm environ.

Ces exemples montrent donc clairement la supériorité des compositions bitume/polymère selon l'invention, par rapport à celles de la technique antérieure, pour ce qui concerne leur résistance aux solvants pétroliers tels que le kérosène.

## Revendications

1. Utilisation d'au moins un polymère oléfinique fonctionnalisé P choisi parmi les terpolymères statistiques d'éthylène, d'acrylate ou de méthacrylate d'alkyle en C₁₋₆ et d'acrylate ou de méthacrylate de glycidyle, renfermant de 0,5 % à 40 % de motifs issus d'acrylate ou de méthacrylate d'alkyle et 0,5 % à 15 % de motifs issus d'acrylate ou de méthacrylate de glycidyle, le reste étant formé de motifs issus d'éthylène et les copolymères statistiques d'éthylène et d'acrylate ou de méthacrylate de glycidyle, renfermant de 0,5 à 15 % en poids de motifs issus d'acrylate ou de méthacrylate de glycidyle, le reste étant formé de motifs issus d'éthylène pour améliorer la résistance aux solvants pétroliers d'une composition bitume/polymère comprenant :
(1) au moins un bitume ;
et, en % en poids du bitume :
(2) entre 0,3% et 20% d'un élastomère réticulable E, et
(3) une quantité efficace d'un agent de couplage Ac apte à fournir une quantité de soufre libre représentant entre 0,1 et 20 % du poids de l'élastomère réticulable E présent dans le milieu réactionnel,
ledit polymère oléfinique fonctionnalisé P étant utilisé en une quantité comprise entre de 0,05% et 15% en poids, rapportée à la quantité de bitume (1) utilisée.

2. Utilisation selon la revendication 1, **caractérisée en ce que** l'élastomère réticulable E est présent dans la composition bitume/polymère finale en une quantité comprise entre 0,5 et 10 % rapportée au poids du bitume.

3. Utilisation selon l'une des revendications 1 et 2, **caractérisée en ce que** l'élastomère réticulable E est choisi parmi le polyisoprène, le polybutadiène, le caoutchouc butyle et les terpolymères éthylène/propylène / diène.

4. Utilisation selon l'une des revendications 1 à 3, **caractérisée en ce que** l'agent de couplage Ac représente entre 0,5 et 10 % du poids de l'élastomère réticulable E.

5. Utilisation selon l'une des revendications 1 à 4, **caractérisée en ce que** le polymère oléfinique fonctionnalisé P représente entre 0,10 et 10 % du poids du bitume.

6. Utilisation selon l'une quelconque des revendications précédentes, **caractérisée par le fait qu'**on incorpore en outre dans la composition un ou plusieurs additifs, de préférence des additifs polyfonctionnels, susceptibles de réagir avec les groupements fonctionnels du ou des copolymères oléfiniques.

7. Utilisation d'une composition bitume/polymère contenant
(1) au moins un bitume,
et, en % en poids du bitume :
(2) entre 0,3% et 20% d'un élastomère réticulable E,
(3) entre 0,05 % et 15 % d'au moins un polymère oléfinique fonctionnalisé P choisi parmi les terpolymères statistiques d'éthylène, d'acrylate ou de méthacrylate d'alkyle en C₁₋₆ et d'acrylate ou de méthacrylate de glycidyle, renfermant de 0,5 % à 40 % de motifs issus d'acrylate ou de méthacrylate d'alkyle et 0,5 % à 15 % de motifs issus d'acrylate ou de méthacrylate de glycidyle, le reste étant formé de motifs issus d'éthylène et les copolymères statistiques d'éthylène et d'acrylate ou de méthacrylate de glycidyle, renfermant de 0,5 à 15 % en poids de motifs issus d'acrylate ou de méthacrylate de glycidyle, le reste étant formé de motifs issus d'éthylène,
(4) et une quantité efficace d'un agent de couplage Ac apte à fournir une quantité de soufre libre représentant entre 0,1 et 20 % du poids de l'élastomère réticulable E présent dans le milieu réactionnel, pour améliorer la résistance aux solvants pétroliers de revêtements, notamment de revêtements superficiels routiers, d'enrobés bitumineux
ou de revêtements d'étanchéité.

8. Utilisation selon la revendication 11, **caractérisée en ce que** l'élastomère réticulable E est présent dans la composition bitume/polymère finale en une quantité comprise entre 0,5 et 10 % rapportée au poids du bitume.

9. Utilisation selon l'une des revendications 11 et 12, **caractérisée en ce que** l'élastomère réticulable E est choisi parmi le polyisoprène, le polybutadiène, le caoutchouc butyle et les terpolymères éthylène/ propylène / diène.

10. Utilisation selon l'une des revendications 11 à 13, **caractérisée en ce que** l'agent de couplage Ac représente entre 0,5 et 10 % du poids de l'élastomère réticulable E.

11. Utilisation selon l'une des revendications 11 à 14, **caractérisée en ce que** le polymère oléfinique fonctionnalisé P représente entre 0,10 et 10 % du poids du bitume.

12. Utilisation selon l'une quelconque des revendications 11 à 19, **caractérisée par le fait que** la composition bitume/polymère contient en outre un ou plusieurs additifs, de préférence des additifs polyfonctionnels, susceptibles de réagir avec les groupements fonctionnels du ou des copolymères oléfiniques.

## Claims

1. Use of at least one functionalised olefin polymer P selected from among the random terpolymers of ethylene, C₁₋₆ alkyl acrylate or methacrylate and glycidyl acrylate or methacrylate, comprising 0.5 % to 40 % of units arising from alkyl acrylate or methacrylate and 0.5 % to 15 % of units arising from glycidyl acrylate or methacrylate, the remainder being formed of units arising from ethylene, and the random copolymers of ethylene and glycidyl acrylate or methacrylate, comprising 0.5 to 15 % by weight of units arising from glycidyl acrylate or methacrylate, the remainder being formed of units arising from ethylene, to improve the resistance to petroleum solvents of a bitumen/polymer composition comprising:
(1) at least one bitumen;
and in % by weight of the bitumen:
(2) between 0.3 % and 20 % of a crosslinkable elastomer E, and
(3) an effective quantity of a coupling agent Ac capable of providing a quantity of free sulfur representing between 0.1 and 20 % of the weight of the crosslinkable elastomer E present in the reaction medium,
said functionalised olefin polymer P being used in a quantity of between 0.05 % and 15 % by weight, relative to the quantity of bitumen (1) used.

2. Use according to claim 1, **characterised in that** the crosslinkable elastomer E is present in the final bitumen/polymer composition in a quantity of between 0.5 and 10 % relative to the weight of the bitumen.

3. Use according to one of claims 1 and 2, **characterised in that** the crosslinkable elastomer E is selected from among polyisoprene, polybutadiene, butyl rubber and ethylene/propylene/diene terpolymers.

4. Use according to one of claims 1 to 3, **characterised in that** the coupling agent Ac represents between 0.5 and 10 % of the weight of the crosslinkable elastomer E.

5. Use according to one of claims 1 to 4, **characterised in that** the functionalised olefin polymer P represents between 0.10 and 10 % of the weight of the bitumen.

6. Use according to any one of the preceding claims, **characterised in that** one or more additives is/are additionally incorporated into the composition, preferably polyfunctional additives capable of reacting with the functional groups of the olefin copolymer(s).

7. Use of a bitumen/polymer composition containing
(1) at least one bitumen,
and in % by weight of the bitumen:
(2) between 0.3 % and 20 % of a crosslinkable elastomer E,
(3) between 0.05 % and 15 % of at least one functionalised olefin polymer P selected from among the random terpolymers of ethylene, C₁₋₆ alkyl acrylate or methacrylate and glycidyl acrylate or methacrylate, comprising 0.5 % to 40 % of units arising from alkyl acrylate or methacrylate and 0.5 % to 15 % of units arising from glycidyl acrylate or methacrylate, the remainder being formed of units arising from ethylene, and the random copolymers of ethylene and glycidyl acrylate or methacrylate, comprising 0.5 to 15 % by weight of units arising from glycidyl acrylate or methacrylate, the remainder being formed of units arising from ethylene
(4) and an effective quantity of a coupling agent Ac capable of providing a quantity of free sulfur representing between 0.1 and 20 % of the weight of the crosslinkable elastomer E present in the reaction medium, to improve the resistance to petroleum solvents of surfacings, in particular road pavements, bituminous paving mixes or sealing coats.

8. Use according to claim 11, **characterised in that** the crosslinkable elastomer E is present in the final bitumen/polymer composition in a quantity of between 0.5 and 10 % relative to the weight of the bitumen.

9. Use according to one of claims 11 and 12, **characterised in that** the crosslinkable elastomer E is selected from among polyisoprene, polybutadiene, butyl rubber and ethylene/propylene/diene terpolymers.

10. Use according to one of claims 11 to 13, **characterised in that** the coupling agent Ac represents between 0.5 and 10 % of the weight of the crosslinkable elastomer E.

11. Use according to one of claims 11 to 14, **characterised in that** the functionalised olefin polymer P represents between 0.10 and 10 % of the weight of the bitumen.

12. Use according to any one of claims 11 to 19, **characterised in that** the bitumen/polymer composition additionally comprises one or more additives, preferably polyfunctional additives, capable of reacting with the functional groups of the olefin copolymer(s).

## Patentansprüche

1. Verwendung von mindestens einem funktionalisierten olefinischen Polymer P, das aus den statistischen Terpolymeren von Ethylen, C₁₋₆-Alkylacrylat oder -methacrylat und Glycidylacrylat oder -methacrylat, die 0,5% bis 40% an Einheiten, die vom Alkylacrylat oder -methacrylat stammen, und 0,5% bis 15% an Einheiten, die vom Glycidylacrylat oder
- methacrylat stammen, enthalten, wobei der Rest von Einheiten, die vom Ethylen stammen, gebildet wird, und den statistischen Copolymeren von Ethylen und Glycidylacrylat oder
- methacrylat, die 0,5 bis 15 Gew.-% an Einheiten, die vom Glycidylacrylat oder -methacrylat stammen, enthalten, wobei der Rest von Einheiten, die vom Ethylen stammen, gebildet wird, ausgewählt ist, zum Verbessern der Beständigkeit gegenüber Erdöl-basierten Lösungsmitteln einer Bitumen/Polymer-Zusammensetzung, die umfasst:
(1) mindestens ein Bitumen;
und in Gew.-% des Bitumens:
(2) zwischen 0,3% und 20% eines vernetzbaren Elastomers E und
(3) eine wirksame Menge eines zum Liefern einer Menge freien Schwefels geeigneten Kupplungsmittels Ac, die zwischen 0,1 und 20 Gew.-% des im Reaktionsmedium anwesenden, vernetzbaren Elastomers E darstellt,
wobei das funktionalisierte olefinische Polymer P in einer Menge von zwischen einschließlich 0,05 Gew.-% und 15 Gew.-%, bezogen auf die Menge des verwendeten Bitumens (1), verwendet wird.

2. Verwendung gemäß Anspruch 1, **dadurch gekennzeichnet, dass** das vernetzbare Elastomer E in der Bitumen/Polymer-Endzusammensetzung in einer Menge zwischen einschließlich 0,5 und 10 Gew.-%, bezogen auf das Bitumen, vorliegt.

3. Verwendung gemäß einem der Ansprüche 1 und 2, **dadurch gekennzeichnet, dass** das vernetzbare Elastomer E aus Polyisopren, Polybutadien, Butylkautschuk und Terpolymeren aus Ethylen/Propylen/Dien ausgewählt ist.

4. Verwendung gemäß einem der Ansprüche 1 bis 3, **dadurch gekennzeichnet, dass** das Kupplungsmittel Ac zwischen 0,5 und 10 Gew.-% des vernetzbaren Elastomers E darstellt.

5. Verwendung gemäß einem der Ansprüche 1 bis 4, **dadurch gekennzeichnet, dass** das funktionalisierte olefinische Polymer P zwischen 0,10 und 10 Gew.-% des Bitumens darstellt.

6. Verwendung gemäß irgendeinem der vorangehenden Ansprüche, **gekennzeichnet durch** die Tatsache, dass in die Zusammensetzung außerdem ein oder mehrere Additive eingebaut sind, vorzugsweise polyfunktionelle Additive, die geeignet sind, mit den funktionellen Gruppen des oder der olefinischen Copolymere zu reagieren.

7. Verwendung einer Bitumen/Polymer-Zusammensetzung, enthaltend:
(1) mindestens ein Bitumen,
und in Gew.-% des Bitumens:
(2) zwischen 0,3% und 20% eines vernetzbaren Elastomers E,
(3) zwischen 0,05% und 15% Gew.-% von mindestens einem funktionalisierten olefinischen Polymer P, das aus den statistischen Terpolymeren von Ethylen, C₁₋₆-Alkylacrylat oder -methacrylat und Glycidylacrylat oder -methacrylat, die 0,5% bis 40% an Einheiten, die von Alkylacrylat oder -methacrylat stammen, und 0,5% bis 15% an Einheiten, die vom Glycidylacrylat oder vom -methacrylat stammen, enthalten, wobei der Rest von Einheiten, die vom Ethylen stammen, gebildet wird, und den statistischen Copolymeren von Ethylen und Glycidylacrylat oder -methacrylat, die 0,5 bis 15 Gew.-% an Einheiten, die vom Glycidylacrylat oder -methacrylat stammen, enthalten, wobei der Rest von Einheiten, die vom Ethylen stammen, gebildet wird, ausgewählt ist,
(4) und eine wirksame Menge eines zum Liefern einer Menge freien Schwefels geeigneten Kupplungsmittels Ac, die zwischen 0,1 und 20 Gew.-% des im Reaktionsmedium anwesenden, vernetzbaren Elastomers E darstellt,
zum Verbessern der Beständigkeit von Beschichtungen gegenüber Erdöl-basierten Lösungsmitteln, besonders Beschichtungen von Straßenoberflächen, bituminösen Ummantelungen oder von Dichtungsbeschichtungen.

8. Verwendung gemäß Anspruch 7, **dadurch gekennzeichnet, dass** das vernetzbare Elastomer E, das in der Bitumen/Polymer-Endzusammensetzung in einer Menge zwischen einschließlich 0,5 und 10 Gew.-%, bezogen auf das Bitumen, vorliegt.

9. Verwendung gemäß einem der Ansprüche 7 und 8, **dadurch gekennzeichnet, dass** das vernetzbare Elastomer E aus Polyisopren, Polybutadien, Butylkautschuk und Terpolymeren aus Ethylen/Propylen/Dien ausgewählt ist.

10. Verwendung gemäß einem der Ansprüche 7 bis 9, **dadurch gekennzeichnet, dass** das Kupplungsmittel Ac zwischen 0,5 und 10 Gew.-% des vernetzbaren Elastomers E darstellt.

11. Verwendung gemäß einem der Ansprüche 7 bis 10, **dadurch gekennzeichnet, dass** das funktionalisierte olefinische Polymer P zwischen 0,10 und 10% Gew.-% des Bitumens darstellt.

12. Verwendung gemäß irgendeinem der Ansprüche 7 bis 11, **gekennzeichnet durch** die Tatsache, dass in der Bitumen/Polymer-Zusammensetzung außerdem eines oder mehrere Additive, vorzugweise polyfunktionelle Additive, die geeignet sind, mit den funktionellen Gruppen des oder der olefinischen Copolymere zu reagieren, enthalten sind.
